# EUROPEAN PATENT APPLICATION

(11) **EP 1 674 025 A1**
(43) Date of publication of application: **28.06.2006**
(21) Application number: 05291914.9
(22) Date of filing: 16.09.2005
(51) Int. Cl.: A47L 9/16, A47L 7/00, B04C 9/00, B01D 50/00

(54) **Dust collecting apparatus for a vacuum cleaner**

(30) Priority: 22.12.2004 KR 2004110060
(71) Applicant: Samsung Gwangju Electronics Co., Ltd., Gwangju-city (KR)
(72) Inventor: Seo, Ji-Won, Gwangsan-gu Gwangju-city (KR); Oh, Jang-Keun, Seo-gu Gwangju-city (KR)
(74) Representative: Blot, Philippe Robert Emile

(57) **Abstract**

A dust collecting apparatus (100) of a vacuum cleaner (10) separately collects liquid and dust particles. In an embodiment, the dust collecting apparatus (100) of a vacuum cleaner (10) has a cyclone body (110) comprising an air inlet (113) and an air outlet (111), a dust collecting receptacle (120) coupled to the lower part of the cyclone body (110) and storing therein dust which is separated from air drawn in via the air inlet (113), and a liquid collecting receptacle (130) coupled to the lower part of the dust collecting receptacle (120) and storing therein liquid particles separated from the air and the dust which are drawn in via the air inlet (113).

## Description

This application claims the benefit of Korean Patent Application No. 2004-110060, filed December 22, 2004 in the Korean Intellectual Property Office, the disclosure of which is incorporated herein by reference.

### CROSS-REFERENCE TO RELATED APPLICATIONS

The subject matter of this application may be related to the subject matter of the following co-pending applications: U.S. Patent application Serial No. (to be assigned), titled "Vacuum Cleaner Dust Collecting Apparatus and Method" (Attorney Docket No. 116511-00163, claiming priority of Korean Application No. 2004-110061), U.S. Patent application Serial No. (to be assigned), titled "Vacuum Cleaner Dust Collecting Apparatus" (Attorney Docket No. 116511-00158, claiming priority of Korean Application No. 2004-110059).

### BACKGROUND OF THE INVENTION

### Field of the Invention

In exemplary embodiments, the present invention relates generally to the field of vacuum cleaners, and comprises dust collecting apparatus for a vacuum cleaner that separates liquid and dust particles.

### Description of the Related Art

Examples of generally-available dust collectors include dust bags and devices that rotate dust-laden air in a 'cyclone' to separate the dust from the air.

Because the dust bag has a limited life span, and requires frequent replacement with new ones, the 'cyclone' dust collectors have become popular.

The inventors have identified a problem arising when liquid particles are entrained in the dust-laden air so that as they are collected, they cause growth of fungus and germs in a dust collecting receptacle. An unpleasant odor may also develop when liquid particles are included in the collected contaminants.

Additionally, such liquid particles, whether remaining in the air or flowing back from the collected contaminants, may enter filters such as an exhaust filter, often causing the filters to jam. This reduces the suction force of the vacuum cleaner, and may consequentially overload or otherwise damage the suction motor. Therefore, there is a need for improvements in conventional dust collection designs.

### SUMMARY OF THE INVENTION

In an embodiment, a dust collecting apparatus separately collects dust and liquid articles. In some embodiments, a_dust collecting apparatus prevents backflow of liquid particles collected therein. An exemplary embodiment of a dust collecting apparatus of a vacuum cleaner comprises a cyclone body with an air inlet and an air outlet, a dust collecting receptacle coupled to the lower part of the cyclone body to store dust which is separated from intake air drawn in via the air inlet, and a liquid collecting receptacle coupled to the lower part of the dust collecting receptacle to store liquid particles separated from the air and the dust.

Because dust is collected above the liquid particles, the collected dust blocks the liquid particles from backflow via the air outlet. Furthermore, collecting the liquid particles separately from the dust particles prevents fungus and germ growth and unpleasant odors.

In certain embodiments, at least one filter with a liquid passing hole therein is provided between the dust collecting receptacle and the liquid collecting receptacle. The liquid passing hole may be so sized as to pass the liquid particles by force of gravity, while blocking the dust particles from passing. The dust collecting receptacle and the liquid collecting receptacle may be integrally formed with each other. In some embodiments, the liquid collecting receptacle opens and closes at its lower end.

### BRIEF DESCRIPTION OF THE DRAWINGS

The above aspects and features of the present invention will be more apparent by describing certain embodiments of the present invention with reference to the accompanying drawings, in which:

FIG. 1 is a perspective view of an upright vacuum cleaner employing therein a dust collecting apparatus according to a first embodiment of the present invention;

FIG. 2 is a perspective view of the dust collecting apparatus of FIG. 1;

FIG. 3 is an exploded perspective view of the dust collecting apparatus of FIG. 2;

FIG. 4 is a sectional view taken on lines IV-IV of FIG. 2; and

FIG. 5 is a sectional view of a dust collecting apparatus according to a second embodiment of the present invention.

### DETAILED DESCRIPTION OF THE PREFERRED EMBODIMENTS

Certain embodiments of the present invention will be described in greater detail with reference to the accompanying drawings.

In the following description, the same drawing reference numerals may be used for similar elements even in different drawings. The embodiments described, and their detailed construction and elements, are merely provided to assist in a comprehensive understanding of the invention. Thus, it is apparent that the present invention can be carried out in a variety of ways, and does not require any of the specific features described herein. Also, well-known functions or constructions are not described in detail since they would obscure the invention with unnecessary detail.

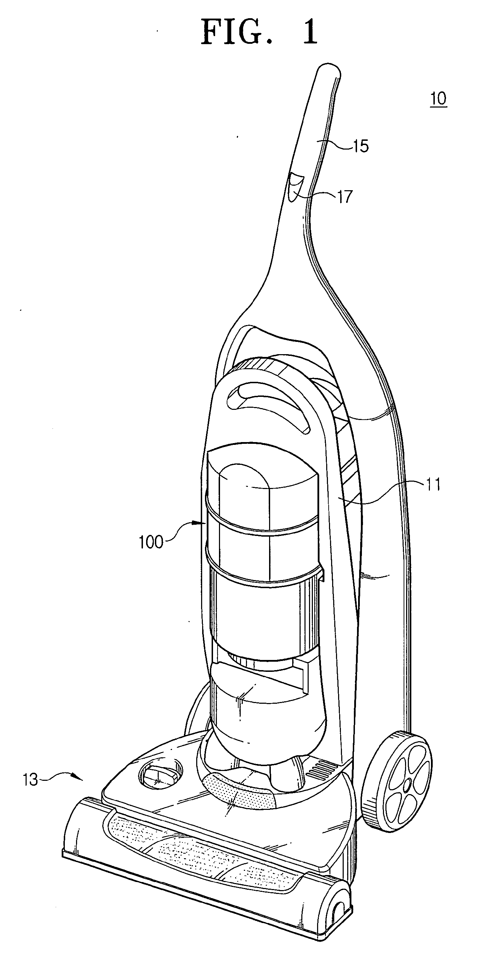

Referring to FIG. 1, an upright vacuum cleaner 10 having a dust collecting apparatus 100 according to a first embodiment of the present invention includes a cleaner body 11, a brush assembly 13, a handle 15 and the dust collecting apparatus 100.

The cleaner body 11 includes a vacuum source (not shown) which provides suction force, and an exhaust filter (not shown).

The brush assembly 13 is disposed at the lower side of the cleaner body 11, to draw in dust and liquid particles from a surface being cleaned.

The handle 15 is rotatably attached to the cleaner body 11 at a predetermined angle, and includes on/off switch 17 to operate the vacuum cleaner 10.

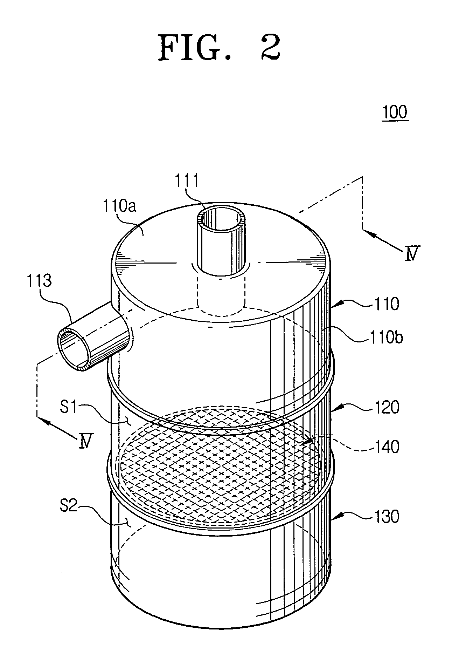

Referring to FIGS. 1 and 2, the dust collecting apparatus 100 is attachable and detachable from the cleaner body 11, and separates dust and liquid particles from the intake air using centrifugal force.

In the embodiment shown in FIG. 1, the dust collecting apparatus 100 includes a first space S1 for collecting separated dust, and a second space S2, provided at a lower side of the first space S1, for collecting liquid particles. The first and second spaces S 1 and S2 are divided from each other by a filter net 140.

The dust collecting apparatus 100 includes a cyclone body 110, a dust collecting receptacle 120, a liquid collecting receptacle 130 and the filter net 140.

The cyclone body 110 takes on a cylindrical configuration and is provided to separate dust and liquid from the intake air. The cyclone body 110 has an air discharge passage 111 at an upper part 110a through which substantially contaminant-free air is discharged. The air discharge passage 111 takes on the configuration of a cylindrical tube, which is welded or attached to the upper side of the cyclone body 110. Alternatively, the air discharge passage 111 may be integrally formed with the cyclone body 110 by molding. Although the embodiment presented in this description describes cylindrical pipe as the air discharge passage 111, one will appreciate that this is only for an example and therefore, the air discharge passage 111 may taken on any desired configuration, for example, a rectangular pipe. Furthermore, the air discharge passage 111 may be inserted a predetermined distance into the cyclone body 110 and a grill (not shown) is disposed on the inserted portion of the air discharge passage 111.

The cyclone body 110 has an air inlet passage 113 formed in a circumference 110b, through which air, entrained with dust and/or liquid particles, flows into the cyclone body 110 to create a rotating air current that produces centrifugal force. The air inlet passage 113 may also take on the configuration of a cylindrical pipe and may be welded or attached to the circumference 110b of the cyclone body 110. The air inlet passage 113 may be integrally formed with the cyclone body 110 by molding. The air inlet passage 113 may also take a variety of appropriate configurations other than a cylindrical shape as described in the present embodiment, such as a rectangular pipe or the like.

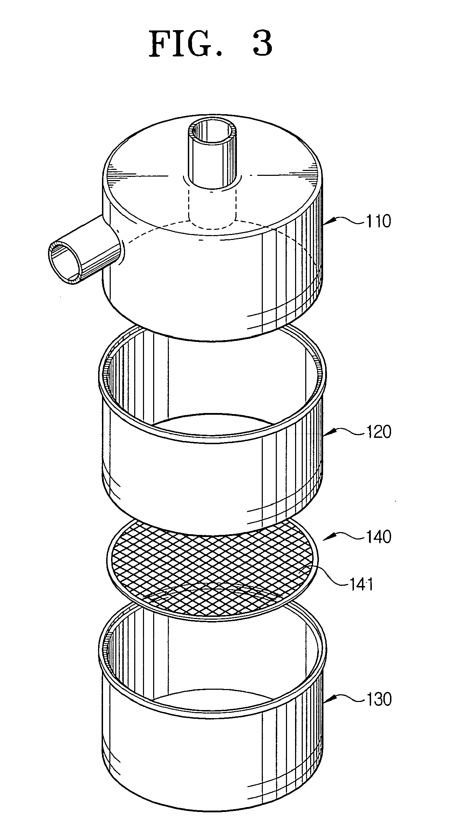

Referring to FIGS. 2 and 3, the cyclone body 110 has an open lower end to fluidly connected with the dust collecting receptacle 120. The bottom of the cyclone body 110 may be removed to achieve this end.

The dust collecting receptacle 120 may take on the configuration of a cylinder having upper and lower open ends. The dust collecting receptacle 120 is attachable and detachable from the lower side of the cyclone body 110.

The liquid collecting receptacle 130 may take on the configuration of a cylinder having upper and lower open ends. The liquid collecting receptacle 130 is attachable and detachable from the lower side of the dust collecting receptacle 120.

The filter net 140 may have a circular shape and is disposed between the dust collecting receptacle 120 and the liquid collecting receptacle 130 by welding or any other method of attachment.

Referring to FIG. 3, the filter net 140 includes a plurality of liquid passing holes 141. The liquid passing holes 141 may each have a rectangular hole configuration with a predetermined length and height. The liquid passing holes 141 may take on a variety of operable configurations, such as circular holes of a predetermined diameter and the like. The liquid passing holes 141 are sized in accordance with the size of the dust particles that are to be blocked. Because liquid may not pass through holes 141 if holes 141 are too small, it is preferable to form the liquid passing holes 141 of the filter net 140 with a predetermined size that will pass liquid particles. The liquid passing hole may be formed to pass the liquid particle by a force of gravity.

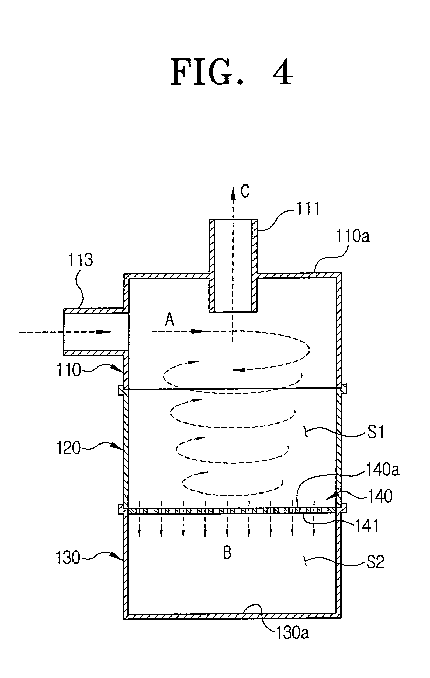

Referring to FIG. 4, the cyclone body 110, the dust collecting receptacle 120 and the filter net 140 form the dust collecting space S1, and the liquid collecting receptacle 130 and the filter net 140 form the liquid collecting space S2.

With the construction as described above, liquid and dust are initially filtered out at the upper side 140a of the filter net 140. The dust filtered out in this manner remains at the upper side 140a of the filter net 140, while the liquid particles are passed through the liquid passing holes 141 in the direction of arrow B and dropped to the bottom 130a of the liquid collecting receptacle 130. As a result, dust is collected in the dust collecting space S1 and liquid particles are collected in the liquid collecting space S2.

Once collected, the liquid particles are blocked by the dust which is collected on the upper side 140a of the filter net 140 and therefore, prevented from backflowing into the air discharge passage 111.

Meanwhile, elements such as the cyclone body 110, the dust collecting receptacle 120 and the liquid collecting receptacle 130 may be connected by any desired connection method such as force fitting as exemplarily illustrated in FIG. 4, or screws or hooks may be used for more stable coupling.

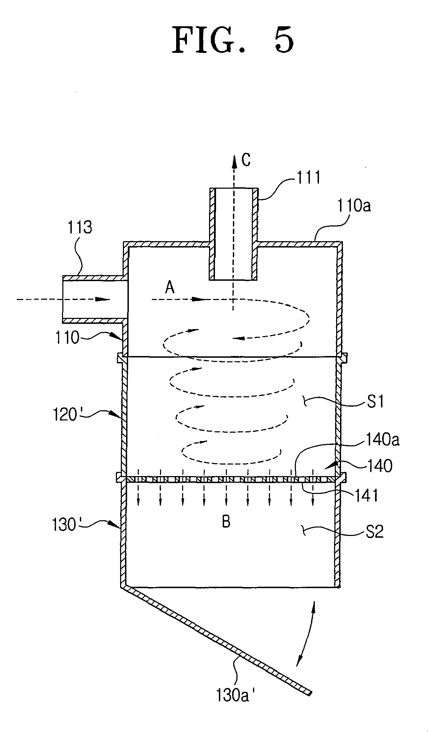

FIG. 5 illustrates another exemplary embodiment of a dust collecting apparatus. As shown, the dust collecting receptacle 120' and the liquid collecting receptacle 130' are formed integrally with each other, with the lower wall 130a' of the liquid collecting receptacle 130' formed so that it can open and close. Accordingly, it is easy to remove liquid from the liquid collecting receptacle 130'. It will be understood that the remaining elements are, in most cases, similar to those described relative to the exemplary embodiments above; for the sake of brevity that description will not be repeated.

Meanwhile, the dust collecting apparatus 100 according to both the first and second embodiments of the present invention are applicable to a variety of vacuum cleaners including canister, upright and robot cleaners. However, when considering the vertical relation of the dust and liquid collecting spaces S1 and S2, it is preferably to apply the dust collecting apparatus 100 in the upright vacuum cleaner which suffers from fewer height limitations.

The operation of the dust collecting apparatus 100 according to a first embodiment of the present invention will now be described in more detail.

Referring to FIG. 1, a user holds the handle 15 and moves the brush assembly 13 of the vacuum cleaner 10 along the surface being cleaned. At this time, liquid and dust particles of the cleaning surface are drawn in by the suction force of the suction source (not shown) of the cleaner body 11, and therefore, flow into the dust collecting apparatus 100 via the brush assembly 13.

Referring to FIG. 4, dust and liquid particles of the air drawn into the cyclone body 110 through the air inlet passage 113 in the direction of arrow A, are separated in a circularly manner from the drawn air by the centrifugal force of the rotating air.

Once separated, the dust and liquid particles are firstly collected at the upper side 140a of the filter net 140 which is disposed at the lower part of the dust collecting receptacle 120. Accordingly, dust remain on the upper side 140a of the filter net 140, while the liquid particles are passed through the liquid passing holes 141 in the direction of arrow B and fall to the bottom 130a of the liquid collecting receptacle 130.

After that, the dust-, or liquid-free air is discharged from the dust collecting apparatus 100 in the direction of arrow C, via the air discharge passage 111 which is formed at the upper side 110a of the cyclone body 110.

Various exemplary embodiments of the dust collecting apparatus 100 as described above provide the following advantages.

First, in selected embodiments liquid particles are collected separately from dust particles. Because there are no liquid particles in the dust, dust particles do not attach to the wall of the dust collecting receptacle and are easily discharged.

Secondly, because dust and liquid particles are collected separately from each other, the dust collecting receptacles can be kept clean. Furthermore, the dust collecting receptacle can be kept hygienic because the design prevents growth of fungus or germs on the liquid particles.

Thirdly, once collected, the collected liquid particles are prevented from backflowing as they are blocked by the filter net and dust collected at the filter net. Accordingly, filter blockage due to backflow of liquid particles can be prevented. As a result, the cleaner can keep a constant suction force and the suction motor can operate without being overloaded.

The foregoing embodiments and advantages are merely exemplary and are not to be construed as limiting the present invention. The present teaching can be readily applied to other types of apparatus. Also, the description of the embodiments of the present invention is intended to be illustrative, and not to limit the scope of the claims, and many alternatives, modifications, and variations will be apparent to those skilled in the art.

## Claims

1. A dust collecting apparatus of a vacuum cleaner, comprising:
a cyclone body comprising an air inlet and an air outlet;
a dust collecting receptacle coupled to the lower part of the cyclone body and storing therein dust which is separated from air drawn in via the air inlet; and
a liquid collecting receptacle coupled to the lower part of the dust collecting receptacle and storing therein liquid particles separated from the air drawn in via the air inlet.

2. The dust collecting apparatus of claim 1, further comprising at least one filter between the dust collecting receptacle and the liquid collecting receptacle, the filter having a liquid passing hole.

3. The dust collecting apparatus according to any of claims 1 and 2, wherein the dust collecting receptacle and the liquid collecting receptacle are integrally formed with each other.

4. The dust collecting apparatus of claim 2, wherein the liquid passing hole is formed to pass the liquid particle by a force of gravity, but is unable to pass the dust particles.

5. The dust collecting apparatus according to any of the preceding claims, wherein the liquid collecting receptacle is able to open and close at its lower end.
